# EUROPÄISCHE PATENTSCHRIFT

(11) **EP 1 343 975 B1**
(45) Veröffentlichungstag und Bekanntmachung des Hinweises auf die Patenterteilung: **20.10.2004**
(21) Anmeldenummer: 01990415.0
(22) Anmeldetag: 15.11.2001
(51) Int. Cl.: F16B 33/02, F16B 31/00, F16H 25/22

(54) **ZUGÜBERTRAGENDE BEFESTIGUNGSVORRICHTUNG**
TRACTION TRANSMITTING SECURING DEVICE
DISPOSITIF DE FIXATION TRANSMETTANT LA TRACTION

(30) Priorität: 17.11.2000 DE 10057302
(43) Veröffentlichungstag der Anmeldung: 17.09.2003
(73) Patentinhaber: Krauss-Maffei Kunststofftechnik GmbH, 80997 München (DE)
(72) Erfinder: WOHLRAB, Walter, 91781 Weissenburg (DE)
(74) Vertreter: Zollner, Richard, Dipl.-Phys.
(86) Internationale Anmeldenummer: PCT/EP2001/013218
(87) Internationale Veröffentlichungsnummer: WO 2002/040877

(56) Entgegenhaltungen:
- DE-A- 4 115 756
- US-A- 2 870 668
- US-A- 4 266 590
- US-A- 4 840 526
- US-A- 4 846 614
- US-A- 5 370 012

## Beschreibung

Die Erfindung betrifft eine Spritzgießmaschine mit einer zugübertragenden Befestigungsvorrichtung gemäß Oberbegriff des Patentanspruchs 1.

Bei Spritzgießmaschinen dieser Art besteht das Problem, dass aufgrund der Dehnung in dem oder den Säulenelementen bzw. der Stauchung des Sicherungselements im Eingriffsbereich, die Kraft über nur wenige Vorsprünge und Vertiefungen, in der Regel nur zwei bis drei, übertragen wird und es deshalb zu Spannungsspitzen in den Bauteilen kommt. Dies führt oftmals zum Abreißen des Säulenelements an diesen Stellen. Die Spannungsspitzen treten an den über die Rückseite der Formaufspannplatte hinausragenden Enden der Säulen auf, an denen diese Einstiche bzw. Ringnuten aufweisen, in die beispielsweise nach innen vorspringende halbringförmige Rippen der Verriegelungsklammern eingreifen.

Es ist grundsätzlich bekannt, die Spannungsspitzen im Bereich eines Widerlagers durch besonders gestaltete Muttern, z.B. Zugmuttem, auszugleichen, die jedoch einen. beträchtlichen Bauaufwand erfordern und auch keine verläßliche Beseitigung von Spannungspitzen gewährleisten.

Ferner ist aus der US 2,870,668 eine Schrauben-Muttereinheit bekannt, die eine Schraube mit einem Gewinde, welches eine Schrauben-Gewindesteigung p aufweist, und andererseits eine Mutter umfaßt, die ein Gewinde mit einer Mutter-Gewindesteigung p' besitzt. Bei einer Spannung der Schrauben-Mutter-Einheit in axialer Richtung wird die Schraube so weit gelängt und die Mutter so gestaucht, dass die Schrauben-Gewindesteigung der Mutter-Gewindesteigung entspricht Ähnliche Lehren sind aus der US 4,840,526 sowie der US 4,846,614 bekannt. Eine Anwendung in einer Spritzgießmaschine ist vorliegend nicht angesprochen.

In der DE 44 12 539 A1 ist eine Kugelumlaufspindel mit einer Kugelumlaufwelle und einer Kugelmutter beschrieben zwischen denen eine Kugelumlaufbahn mit einer Vielzahl von Kugeln vorgesehen ist. Die Kugelumlaufrille der Kugelmutter ist so beschaffen, dass ein Spalt in Richtung einer Lastwirklinie zwischen die Kugel und dem weiter von einem Befestigungsabschnitt der Kugelmutter entfernten Kugelumlaufrillenabschnitt um einen bestimmten Betrag kleiner als ein Spalt in Richtung derselben Lastwirklinien zwischen der Kugel und dem näher am Befestigungsabschnitt befindlichen Kugelumlaufrillenabschnitt ist. Dieser Betrag entspricht einer elastischen Verformung, die im entsprechenden Kugelumlaufrillenabschnitt der Kugelmutter durch eine auf diese Kugelmutter wirkende Last verursacht wird. Auch aus diesem Stand der Technik ist keine Spritzgießmaschine der eingangs genannten Art bekannt.

Der vorliegenden Erfindung liegt die Aufgabe zugrunde, bei einer Spritzgießmaschine mit einer zugübertragenden Befestigungsvorrichtung der genannten Art Beschädigungen aufgrund von Spannungsspitzen zu vermeiden.

Diese Aufgabe wird erfindungsgemäß durch die im Anspruch 1 angegebene Vorrichtung gelöst. Die abhängigen Ansprüche beziehen sich auf weitere vorteilhafte Ausgestaltungen und Verwendungen der Erfindung.

Die Erfindung wird nachstehend anhand von Ausführungsbeispielen erläutert. Es zeigt
- Fig.1: Eine schematische Teilansicht einer nach der Erfindung ausgestalteten Schrauben-Mutter-Verbindung,
- Fig.2: eine schematische Perspektivteilansicht eines nach der Erfindung ausgestalteten Kugelspindeltriebes,
- Fig.3: eine schematische Perspektivteilansicht eines nach der Erfindung ausgestalteten Rollengewindetriebes mit einer Detaildarstellung und
- Fig.4: die Draufsicht auf das Grundschema einer Zweiplatten-Spritzgießmaschine.

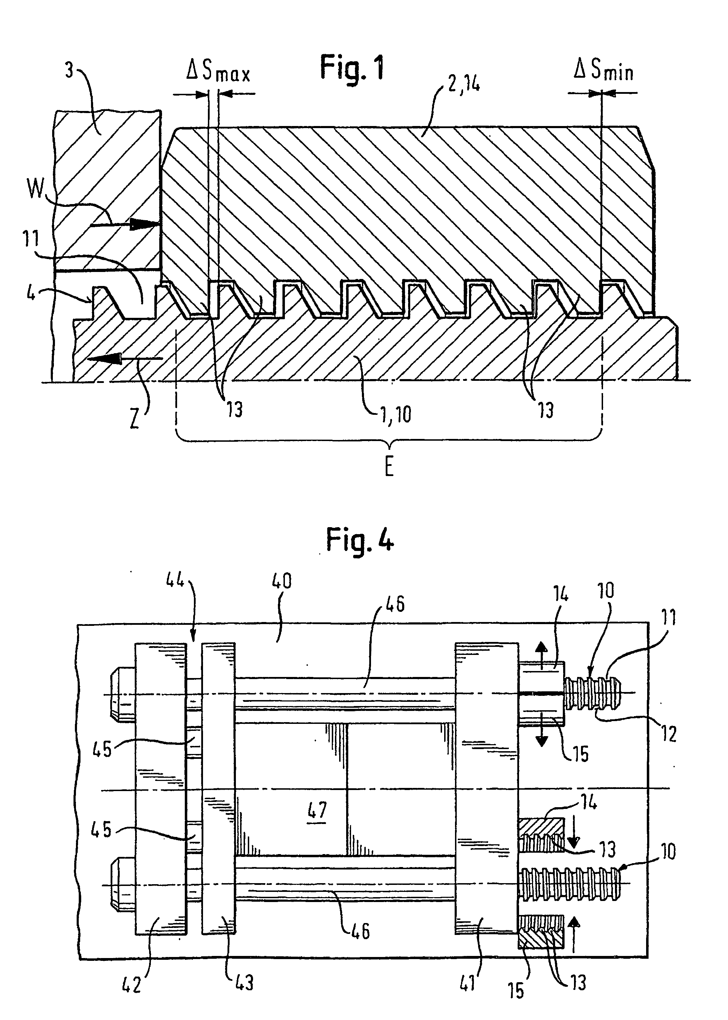

Fig.1 zeigt eine aus einem Schraubenbolzen 1, einer Mutter 2 und einem Widerlager 3 bestehende Schraubenverbindung. Der Schraubenbolzen 1 weist ein Sägegewinde auf, dessen tragende Flanken 4 senkrecht zur Achse des Schraubenbolzens 1 stehen. Das Innengewinde der Mutter 2 ist weitgehend komplementär zum Sägegewinde des Schraubenbolzens. Der Schraubenbolzen 1 steht unter Zugbelastung Z, wodurch die Mutter 2 mit der Kraft W auf das Widerlager 3 gedrückt wird. Das Innengewinde der Mutter 2 und das Gewinde des Schraubenbolzens 1 befinden sich über die Länge der Eingriffszone E im Gewindeeingriff.

Nach der Erfindung ist die Steigung des Sägegewindes des Schraubenbolzens 1 geringfügig kleiner als die Steigung des Innengewindes der Mutter 2, so dass sich folgendes ergibt:

An dem vom Angriffspunkt der Zugbelastung Z entfernteren "hinteren" Ende (rechts in Fig. 1) der Eingriffszone E ist das Flankenspiel an der Flanke 4 am kleinsten und hat den Betrag ΔS ₘᵢₙ, der vorzugsweise Null ist. Das Flankenspiel ΔS nimmt in Richtung der Zugbelastung Z zum anderen Ende der Eingriffszone E hin gleichmäßig zu. Bei Anlegen einer Zugbelastung Z an den Schraubenbolzen 1 kommen somit erst die Flanken 4 im "hinteren" Bereich der Eingriffszone zur kraftübertragenden Anlage und erst bei weiterer Zunahme der Zugspannung Z kommen nach und nach auch die Flanken 4 in den vorderen Bereichen der Eingriffszone E zur kraftübertragenden Anlage bis schließlich bei maximaler Zugbelastung alle Flanken 4 über die gesamte Länge der Eingriffszone E gleichmäßig an der Kraftübertragung beteiligt sind. Dies führt dazu, dass sich die der maximalen Zugbelastung entsprechende Dehnung des Schraubenbolzens im wesentlichen über die gesamte Länge der Eingriffszone E gleichförmig verteilt und somit Spannungsspitzen im vorderen Bereich der Eingriffszone E vermieden werden.

Die kraftübertragende Anlage der Flanken 4 erfolgt bei zunehmender Zugbelastung bei einem Schraubgewinde kontinuierlich in einer dem Flankenverlauf entsprechenden wendelförmigen Bahn.

Die Vorrichtung nach Fig.1 wurde vorstehend anhand einer Schraubverbindung erläutert.

Im nachfolgenden wird anhand der Fig. 1 eine zweite Ausführungsform erläutert, bei der das Bolzenelement 10 mit in Achsrichtung beabstandeten Vertiefungen 11 bzw. parallelen Rillen versehen ist, die senkrechtstehende Flanken 12 aufweisen. In die Rillen greifen im wesentlichen komplementär ausgeformte Vorsprünge 13 eines zweigeteilten Sicherungselements 14 und 15 ein, von dem in Fig. 1 nur das Teil 14 dargestellt ist. Das Flankenspiel ΔS zwischen den Flanken 12 des Bolzenelements 10 und den komplementären Flanken der Vorsprünge 13 des Sicherungselementes 14,15 ist am "hinteren" Ende der Eingriffszone E am kleinsten und hat den Betrag ΔS ₘᵢₙ, der vorzugsweise Null ist. Das Flankenspiel ΔS nimmt in Richtung der Zugbelastung Z zum anderen Ende der Eingriffszone E stufenweise stetig zu. Bei Anlegen einer Zugbelastung Z an das Bolzenelement 10 kommen somit erst die Flanken 11 im "hinteren" Bereich der Eingriffszone zur kraftübertragenden Anlage und erst bei weiterer Zunahme der Zugbelastung Z kommen schrittweise auch die Flanken 11 in den vorderen Bereichen der Eingriffszone E zur kraftübertragenden Anlage bis schließlich bei maximaler Zugbelastung Z alle Flanken 11 über die gesamte Länge der Eingriffszone E gleichmäßig an der Kraftübertragung beteiligt sind. Dies führt dazu, dass sich die der maximalen Zugbelastung entsprechende Dehnung des Bolzenelementes 10 im wesentlichen über die gesamte Länge der Eingriffszone E gleichförmig verteilt und somit Spannungsspitzen im vorderen Bereich der Eingriffszone E vermieden werden.

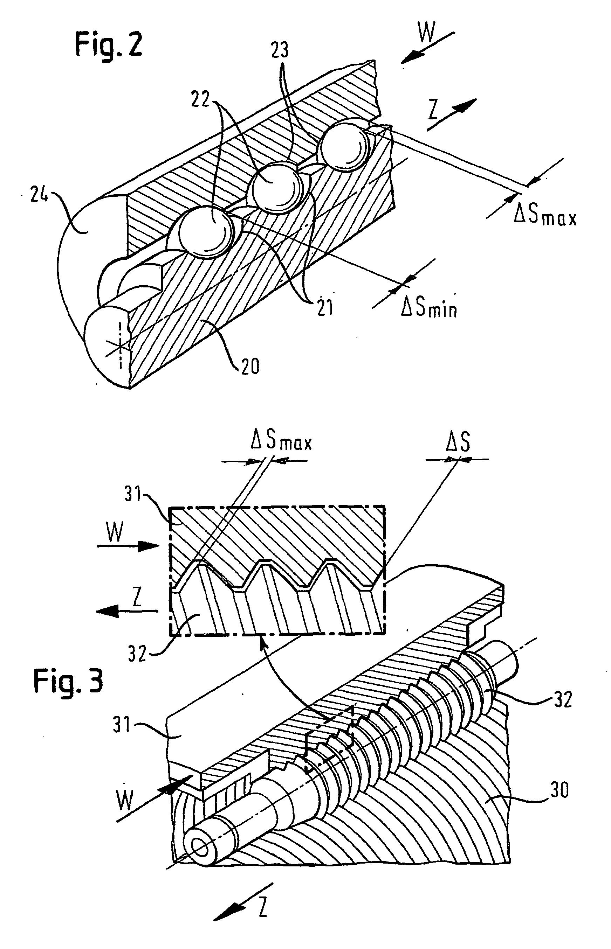

Gemäß Fig. 2 ist das Bolzenelement der Spindelbolzen 20 eines Kugelgewindetriebes, in dessen Gewinderillen 21 Kugeln 22 als Wälzkörper gelagert sind, die gleichfalls in die Gewinderillen 23 der Spindelmutter 24 eingreifen. Nach der Erfindung ist zwischen den in den Gewinderillen 21 gelagerten Kugeln 22 und den Gewinderillen 23 ein Spiel ΔS eingestellt, das an dem der Zugbelastung Z entfernteren hinteren Ende Null bzw. ΔS ₘᵢₙ ist, und das in Richtung der Zugbelastung Z gleichmäßig zunimmt und am vorderen Ende der Spindelmutter 24 das maximale Spiel ΔSₘₐₓ aufweist. Das erfinderische Prinzip ist in der Fig.2 stark schematisiert, d.h. anhand von nur drei Kugeln 22 dargestellt, von denen die linke Kugel ohne Spiel (ΔS ₘᵢₙ) kraftübertragend in beiden Gewinderillen 21 und 23 anliegt und bereits die übernächste Kugel mit größtem Spiel ΔS ₘₐₓ zur Gewinderille 23 der Gewindemutter 24 beabstandet ist. Bei Anlegen der Zugbelastung Z am Spindelbolzen 20 kommen somit in der Darstellung nach Fig.2 erst die Kugeln 22 im vorderen Bereich kraftübertragend an den Gewinderillen 23 der Spindelmutter 24 zur Auflage und erst bei weiterer Zunahme der Zugspannung Z kommen nach und nach auch die hinteren Kugeln 22 zur kraftübertragenden Auflage, bis schließlich bei maximaler Zugbelastung alle von der Spindelmutter 24 umschlossenen Kugeln 22 gleichmäßig an der Kraftübertragung beteiligt sind.

Die Fig. 3 zeigt einen Rollengewindetrieb, wie er beispielsweise im Prospekt der Firma INA Lineartechnik oHG, Homburg (Saar); 1999, März; 8., überarbeiteter Nachdruck, enthalten ist. Das Bolzenelement ist dabei die Gewindespindel 30 und das Sicherungselement ist die Gewindemutter 31. Zwischen der Gewindespindel 30 und der Gewindemutter 31 sind achsparallel Gewinderollen 32 als Wälzkörper angeordnet. Die Gewindegänge von Gewindespindel 30, Gewinderollen 32 und Gewindemutter 31 greifen formschlüssig ineinander, wobei mit der Länge der Gewinderollen im wesentlichen die Eingriffszone E des Rollengewindetriebes bestimmt ist. Gemäß der Erfindung ist zwischen den Flanken der Gewindegänge der Gewinderollen 32 und den Flanken der Gewindegänge der Gewindemutter 31 ein Flankenspiel ΔS eingestellt, das an dem der Zugbelastung (Z) entfernteren hinteren Ende Null ist, und das in Richtung der Zugbelastung Z gleichmäßig zunimmt und am vorderen Ende der Gewindemutter 31 das maximale Flankenspiel ΔS ₘₐₓ aufweist. Bei Anlegen der Zugbelastung Z an der Gewindespindel 30 kommen somit erst die Flanken von Gewinderollen 32 und Gewindemutter 31 im hinteren Bereich kraftübertragend zur Auflage und erst bei weiterer Zunahme der Zugspannung Z kommen nach und nach auch die Flanken in den vorderen Bereichen zur kraftübertragenden Anlage bis schließlich bei maximaler Zugbelastung alle Flanken über die gesamte Länge der Gewinderollen 32 gleichmäßig an der Kraftübertragung beteiligt sind. Das vorbeschriebene Flankenspiel ΔS ist vorzugsweise in gleicher Weise zwischen den Flanken der Gewinde von Gewindespindel 30 und Gewinderollen 32 eingestellt, so dass sichergestellt ist, dass in den drei Gewindeelementen Gewindespindel 30, Gewinderollen 32 und Gewindemutter 31 eine gleichmäßige Lastverteilung stattfindet und somit Spannungsspitzen vermieden werden. Im Gegensatz zu dem zu Fig.2 beschriebenen Kugelgewindetrieb weist der Rollengewindetrieb eine wesentlich höhere Tragfähigkeit auf.

Die Fig.4 zeigt die Draufsicht auf eine sogenannte Zweiplatten-Spritzgießmaschine mit einer fest mit dem Maschinenbett 40 verbundenen festen Formaufspannplatte 41. Auf dem Maschinenbett 40 ist eine aus einer Druckplatte 42 und einer Platte 43 bestehende bewegliche Formaufspannplatte 44 abgestützt. Zwischen der Druckplatte 42 und der Platte 43 sind Druckkolben 45 angeordnet. Die bewegliche Formaufspannptatte 44 ist über Säulen 46 zugfest mit der festen Formaufspannplatte 41 verbindbar. Die Säulen 46 durchsetzen die feste Formaufspannplatte 41 und sind auf deren Rückseite mechanisch verriegelbar. Zwischen der festen und der beweglichen Formaufspannplatte 41 und 44 befindet sich das Werkzeug 47.

Die Verriegelung erfolgt in gleicher Weise wie bei der zu Fig.1 beschriebenen zweiten Ausführungsform. Die einander funktionell entsprechenden Teile sind daher mit gleichen Bezugszeichen versehen. Die über die feste Formaufspannplatte 41 hinausragenden Enden der Säulen 46 entsprechen den Bolzenelementen 10 mit den in Achsrichtung beabstandeten Vertiefungen 11 bzw. parallelen Rillen. Die Vertiefungen 11 weisen senkrecht zur Achse der Bolzenelemente 10 stehende Flanken 12 auf. In die Vertiefungen 11 greifen im wesentlichen komplementär ausgeformte Vorsprünge 13 eines zweigeteilten Sicherungselementes 14 und 15 ein. Die im oberen Bereich von Fig.4 dargestellten Sicherungselemente 14 und 15 befinden sich in Verriegelungsstellung und die im unteren Bereich geschnitten dargestellten Sicherungselemente 14 und 15 befinden sich in entriegelter Stellung. Da mit der Verriegelungseinrichtung Identität mit der zweiten Ausführungsform nach Fig 1 gegeben ist, wird für das Weitere auf die Beschreibung zu Fig. 1 verwiesen.

### Zugübertragende Befestigungsvorrichtung

### Bezugszeichenliste

- 1: Schraubenbolzen
- 2: Mutter
- 3: Widerlager
- 4: Flanken

- Z: Zugbelastung
- W: Kraft am Widerlager
- E: Eingriffszone
- ΔS: Flankenspiel

### Fig.1 2.Ausführungsform

- 10: Bolzenelement
- 11: Vertiefungen
- 12: Flanken
- 13: Vorsprünge
- 14,15: Sicherungselement

### Fig. 2

- 20: Spindelbolzen
- 21: Gewinderillen (Spindelbolzen)
- 22: Kugel
- 23: Gewinderillen (Spindelmutter)

### Fig.3

- 30: Gewindespindel
- 31: Gewindemutter
- 32: Gewinderollen

### Fig. 4

- 40: Maschinenbett
- 41: feste Formaufspannplatte
- 42: Druckplatte
- 43: Platte
- 44: bewegliche Formaufspannplatte
- 45: Druckkolben
- 46: Säule = 10 Bolzenelement
- 47: Werkzeug
- 11: Vertiefungen
- 12: Flanken
- 13: Vorsprünge
- 14,15: Sicherungselement

## Patentansprüche

1. Spritzgießmaschine mit einer zugübertragenden Befestigungsvorrichtung umfassend zumindest ein Säulenelement (46) zum miteinander zugfesten Verbinden einer festen und einer beweglichen Formauspannplatte (41, 44) sowie ein jeweils einem Säulenelement zugeordnetes Sicherungselement, welches an der Rückseite einer Formaufspannplatte angeordnet ist, wobei das zumindest eine Säulenelement (46) und das jeweils zugeordnete Sicherungselement innerhalb einer Eingriffszone E mit einer Anzahl von in Achsrichtung beabstandeten Vorsprüngen und Vertiefungen formschlüssig ineinandergreifen und zwischen den Vorsprüngen und Vertiefungen, die bei Zugbelastung gegeneinander gedrückt werden, ein gewisses axiales Spiel vorgesehen ist,
**dadurch gekennzeichnet,**
**dass** der Betrag des Spiels über die Länge der Eingriffszone E in der der Zugbelastung Z des Säulenelementes entsprechenden Axialrichtung zunimmt.

2. Spritzgießmaschine nach Anspruch 1,
**dadurch gekennzeichnet,**
**dass** das zumindest eine Säulenelement (46) nach Art eines Schraubenbolzens (1) ausgebildet ist und das Sicherungselement aus einer Mutter (2) besteht, wobei die Vorsprünge und Vertiefungen ineinandergreifende Gewindegänge sind und die Zunahme des Spiels ΔS über die Länge der Eingriffszone E durch geringfügige Unterschiede der Steigungswinkel der Gewindegänge von Schraubenbolzen (1) und Mutter (2) hergestellt wird.

3. Spritzgießmaschine nach Anspruch 1,
**dadurch gekennzeichnet,**
**dass** das zumindest eine Säulenelement (46) aus einem mit Gewinderillen versehenen Spindelbolzen (20) und das Sicherungselement aus einer mit Gewinderillen (23) versehenen Spindelmutter (24) besteht, wobei die Gewinderillen (21) des Spindelbolzens (20) und die Gewinderillen (23) der Spindelmutter (24) über in beiden Gewinderillen (21,23) angeordnete Wälzkörper formschlüssig verbunden sind und die Zunahme des Spiels ΔS über die Länge der Eingriffszone E durch geringfügige Unterschiede der Steigungswinkel der Gewinderillen (21,23) von Spindelbolzen (20) und Spindelmutter (24) hergestellt wird.

4. Spritzgießmaschine nach Anspruch 3,
**dadurch gekennzeichnet,**
**dass** der Spindelbolzen (20), die Walzkörper und die Spindelmutter (24) ein Kugelgewindetrieb sind.

5. Spritzgießmaschine nach Anspruch 1,
**dadurch gekennzeichnet,**
**dass** das Säulenelement eine Gewindespindel (30) und das Sicherungselement eine Gewindemutter (31) eines Rollengewindetriebes sind, bei dem in der Gewindemutter (31) achsparallel Gewinderollen (32) angeordnet sind, wobei die Gewindegänge von Gewindespindel (30), Gewinderollen (32) und Gewindemutter (31) formschlüssig ineinander greifen und die Zunahme des Flankenspiels ΔS über die Eingriffszone E durch geringfügige Unterschiede der Steigungswinkel der Gewindegänge von Gewindespindel (30) einerseits und von Gewinderollen (32) und Gewindemutter (31) andererseits oder von Gewindespindel (30) und Gewinderollen (32) einerseits und von Gewindemutter (31) und Gewinderollen (32) andererseits hergestellt wird.

6. Spritzgießmaschine nach Anspruch 1,
**dadurch gekennzeichnet,**
**dass** die Vorsprünge und Vertiefungen formschlüssig ineinander greifende Ringnuten sind und das Sicherungselement aus zweigeteilten Verriegelungselementen (14,15) besteht.

7. Spritzgießmaschine nach Anspruch 6,
**dadurch gekennzeichnet,**
**dass** die geteilte Verriegelungsklammer (14,15) mit nach innen vorspringenden halbringförmigen Rippen in entsprechende Ringnuten der zugehörigen Säulen (46) eingreifen.

8. Spritzgießmaschine nach Anspruch 1,
**dadurch gekennzeichnet,**
**dass** das Bolzehelement aus einer Zahnstange besteht mit einer Anzahl von in Achsrichtung beabstandeten Vorsprüngen in Form von Zähnen und das Sicherungselement aus formschlüssig zwischen die Zähne einschiebbaren, in Achsrichtung beabstandeten, einschiebbaren Sperrklinken besteht.

## Claims

1. An injection moulding machine having a fastening device that transmits tensile force and comprises at least one column element (46) for the high tensile strength connection of a fixed and a moveable mould-clamping platen (41, 44) to one another and also a retention element associated in each case to a column element, which is disposed on the rear side of a mould-clamping platen, the at least one column element (46) and the respectively associated retention element engaging positively in one another inside an engagement zone E by a number of projections and recesses spaced in the axial direction and a certain axial clearance being provided between the projections and recesses, which are forced towards one another when a tensile load occurs,
**characterised in that** the amount of clearance over the length of the engagement zone E increases in the axial direction corresponding to the tensile load Z of the column element.

2. An injection moulding machine according to Claim 1,
**characterised in that** the at least one column element (46) is constructed in the manner of a screw bolt (1) and the retention element consists of a nut (2), the projections and recesses being mutually engaging turns and the increase in the clearance ΔS over the length of the engagement zone E being produced by slight differences in the lead angle of the turns of the screw bolt (1) and nut (2).

3. An injection moulding machine according to Claim 1,
**characterised in that** the at least one column element (46) consists of a spindle bolt (20) provided with thread grooves and the retention element consists of a spindle nut (24) provided with thread grooves (23), the thread grooves (21) of the spindle bolt (20) and the thread grooves (23) of the spindle nut (24) being positively connected via rolling elements disposed in both thread grooves (21, 23) and the increase in clearance AS over the length of the engagement zone E being produced by slight differences in the lead angles of the thread grooves (21, 23) of the spindle bolt (20) and of the spindle nut (24).

4. An injection moulding machine according to Claim 3,
**characterised in that** the spindle bolt (20), the rolling elements and the spindle nut (24) are a recirculating ball screw.

5. An injection moulding machine according to Claim 1,
**characterised in that** the column element is a threaded spindle (30) and the retention element is a threaded nut (31) of a planetary roller screw, in which threaded rollers (32) are disposed parallel to the axis in the threaded nut (31),
wherein the turns of the threaded spindle (30), threaded rollers (32) and threaded nut (31) engage positively in one another and the increase in the flank clearance ΔS over the engagement zone E is produced by slight differences in the lead angles of the turns of the threaded spindle (30) on the one hand and of the threaded rollers (32) and threaded nut (31) on the other hand or of the threaded spindle (30) and threaded rollers (32) on the one hand and of the threaded nut (31) and threaded rollers (32) on the other hand.

6. An injection moulding machine according to Claim 1,
**characterised in that** the projections and recesses are ring grooves that engage positively in one another and the retention element consists of locking elements (14, 15) divided, into two.

7. An injection moulding machine according to Claim 6,
**characterised in that** the divided locking clamps (14, 15) engage with inwardly protruding, semi-annular ribs in corresponding ring grooves of the associated columns (46).

8. An injection moulding machine according to Claim 1,
**characterised in that** the bolt element consists of a toothed rack having a number of projections spaced in the axial direction and in the form of teeth and the retention element consists of push-in detent pawls which can be inserted positively between the teeth and are spaced in the axial direction.

## Revendications

1. Presse d'injection avec un dispositif de fixation transmettant la traction comprenant au moins un élément de colonne (46) pour relier ensemble de manière à résister à la traction des plateaux porte-outillage (41, 44) l'un fixe et l'autre mobile, ainsi qu'un élément d'arrêt respectivement associé à un élément de colonne, lequel est disposé sur la face arrière d'un plateau porte-outillage, le au moins un élément de colonne (46) et l'élément d'arrêt respectivement associé se mettant en prise mécanique dans une zone d'engrènement E avec un certain nombre de saillies et de renfoncements espacés en direction de l'axe, et un certain jeu axial étant prévu entre les saillies et les renfoncements, lesquels(le)s sont préssé(e)s les unes contre les autres en cas de contrainte par traction, **caractérisée en ce que** l'ampleur du jeu augmente sur la longueur de la zone d'engrènement E dans la direction. de l'axe correspondant à la contrainte par traction Z de l'élément de colonne.

2. Presse d'injection selon la revendication 1, **caractérisée en ce que** le au moins un élément de colonne (46) est conçu à la manière d'un boulon (1), et **en ce que** l'élément d'arrêt se compose d'un écrou (2), les saillies et renfoncements étant des pas de filet qui se mettent en prise, et moyennant quoi l'augmentation du jeu ΔS sur la longueur de la zone d'engrènement E est produite grâce à des faibles différences des inclinaisons de filetage des pas de filet du boulon (1) et de l'écrou (2).

3. Presse d'injection selon la revendication 1, **caractérisée en ce que** le au moins un élément de colonne (46) se compose d'un boulon de broche (20) pourvu de gorges de filet (21), et **en ce que** l'élément d'arrêt se compose d'un écrou de broche (24) pourvu de gorges de filet (23), les gorges de filet (21) du boulon de broche (20) et les gorges de filet (23) de l'écrou de broche (24) étant reliées mécaniquement grâce à des corps cylindriques disposés dans les deux gorges de filet (21, 23), et l'augmentation du jeu ΔS sur la longueur de la zone d'engrènement E étant produite grâce à de légères différences des inclinaisons de filetage des gorges de filet (21, 23) du boulon de broche (20) et de l'écrou de broche (24).

4. Presse d'injection selon la revendication 3, **caractérisée en ce que** le boulon de broche (20), les corps cylindriques et l'écrou de broche (24) sont une vis d'entraînement à billes.

5. Presse d'injection selon la revendication 1, **caractérisée en ce que** l'élément de colonne est une broche filetée (30) et l'élément d'arrêt un écrou fileté (31) d'une vis d'entraînement à molettes, où des molettes de roulage à filet (32) sont disposées parallèlement à l'axe dans l'écrou fileté (31), moyennant quoi les pas de filet de la broche filetée (30), des molettes de roulage à filet (32) et de l'écrou fileté (31) se mettent en prise mécanique, et moyennant quoi l'augmentation du jeu du filet ΔS sur la zone d'engrènement E est produite grâce à de légères différences entre les inclinaisons de filetage des pas de filet de la broche filetée (30) d'une part et des molettes de roulage à filet (32) et de l'écrou fileté (31) d'autre part, ou de la broche filetée (30) et des molettes de roulage à filet (32) d'une part et de l'écrou fileté (31) et des molettes de roulage à filet (32) d'autre part.

6. Presse d'injection selon la revendication 1, **caractérisée en ce que** les saillies et les renfoncements sont des gorges de retenues qui se mettent en prise mécanique, et **en ce que** l'élément d'arrêt se compose d'éléments de verrouillage (14, 15) divisés en deux.

7. Presse d'injection selon la revendication 6, **caractérisée en ce que** les agrafes de verrouillage (14, 15) divisées en deux se mettent en prise avec des nervures semi-circulaires en saillie vers l'intérieur dans des gorges de retenue correspondantes des colonnes (46) associées.

8. Presse d'injection selon la revendication 1, **caractérisée en ce que** l'élément de boulon se compose d'une crémaillère avec un certain nombre de saillies espacées en direction de l'axe sous la forme de dents, et **en ce que** l'élément d'arrêt se compose de crans d'arrêts insérables pouvant être insérés mécaniquement entre les dents, espacés en direction de l'axe.
